# EUROPÄISCHE PATENTANMELDUNG

(11) **EP 1 721 771 A2**
(43) Veröffentlichungstag der Anmeldung: **15.11.2006**
(21) Anmeldenummer: 06008361.5
(22) Anmeldetag: 22.04.2006
(51) Int. Cl.: B60J 7/04

(54) **Dach für ein Kraftfahrzeug**

(30) Priorität: 10.05.2005 DE 102005021465
(71) Anmelder: CTS Fahrzeug-Dachsysteme GmbH, 74321 Bietigheim-Bissingen (DE)
(72) Erfinder: Salz, Wolfram, 47343 Sachsenheim (DE)

(57) **Zusammenfassung**

Dieses Dach ist für ein Kraftfahrzeug, insbesondere einen Personenkraftwagen geeignet, und es umfasst wenigstens ein entlang von seitlichen Dachrahmen bewegliches erstes Dachelement, welches erste Dachelement sich oberhalb von Insassen des Personenkraftwagens erstreckt und mit einem ersten Querabschnitt an einen zweiten Querabschnitt eines zweiten Dachelements angrenzt.

Zur Optimierung dieses Dachs sind zwischen dem ersten Querabschnitt des ersten Dachelements und dem zweitem Querabschnitt des zweiten Dachelements als Durchsichtbereiche für die Insassen ausgebildete Einformungen vorgesehen.

## Beschreibung

Dach für ein Kraftfahrzeug, insbesondere einen Personenkraftwagen nach dem Oberbegriff des Patentanspruchs 1.

Ein bekannter Personenkraftwagen, US 4,801,174, ist mit einem ein verschiebbares Dachelement aufweisenden Dach versehen, das zwischen einem Querstück eines Windschutzscheibenrahmens und einem Heck verläuft. Das Dachelement besteht aus durchsichtigem Werkstoff, ist längsverschiebbar ausgeführt und schließt mit einem ersten Querabschnitt an einen zweiten Querabschnitt des Querstücks des Windschutzscheibenrahmens an.

Aus der DE 43 35 653 A1 geht ein Dach eines Personenwagens hervor, das über seine in Fahrzeuglängsrichtung verlaufende Länge mehrere Dachabschnitte besitzt. Ein erster winkelbeweglicher Dachabschnitt ist an einem Windschutzscheibenrahmen angelenkt und ist mit einem Querabschnitt an einen weitern Querabschnitt eines zweiten Dachabschnitts herangeführt; beide Dachabschnitte bestehen aus durchscheinendem Glas. Eine ähnliche Ausführung ist der DE 42 03 229 A1 zu entnehmen.

Es ist Aufgabe der Erfindung ein Dach für einen Personenkraftwagen zu schaffen, das mit mehreren für die Sicht von Insassen des Personenkraftwagens optimierten Dachelementen versehen ist.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass mit den durch Einformungen gebildeten Durchsichtsbereichen des zweiten Querabschnitts des zweiten Dachelements die Beobachtung von Vorgängen für die Insassen, namentlich Fahrer und Beifahrer bspw. oberhalb des Personenkraftwagens erleichtert wird. Das zweite Dachelement ist eine winkelbewegliche Windleitvorrichtung, in das die Einformungen von einer Konstruktionsquerebene aus leicht eingearbeitet werden können. Um baulich günstige Verhältnisse zu schaffen sind die Einformungen beiderseits einer Mittellängsebene des Personenkraftwagens, vorzugsweise im Bereich von Insassen -Fahrer und Beifahrer- vorgesehen, und sie sind von einer Ausformung des zweiten Querabschnitts des zweiten Dachabschnitts weggeführt. Vorteilhaft wirkt sich ebenfalls aus, wenn Einformungsbegrenzungen der Einformungen des zweiten Querabschnitts zu seitlichen Dachrahmen hin im Winkel zu der Konstruktionsebene sich erstrecken und eine Verjüngung der Luftleitvorrichtung in Fahrzeugquerrichtung bewirken. Schließlich sind die Einformungen und die Ausformung des zweiten Querabschnitts des zweiten Dachelements in der Weise ausgebildet, dass sich aerodynamische Effekte bspw. zur Absenkung des Luftwiderstandsbeiwerts bzw. Geräuschoptimierung ergeben.

In der Zeichnung wird ein Ausführungsbeispiel der Erfindung gezeigt, das nachstehend näher erläutert wird.

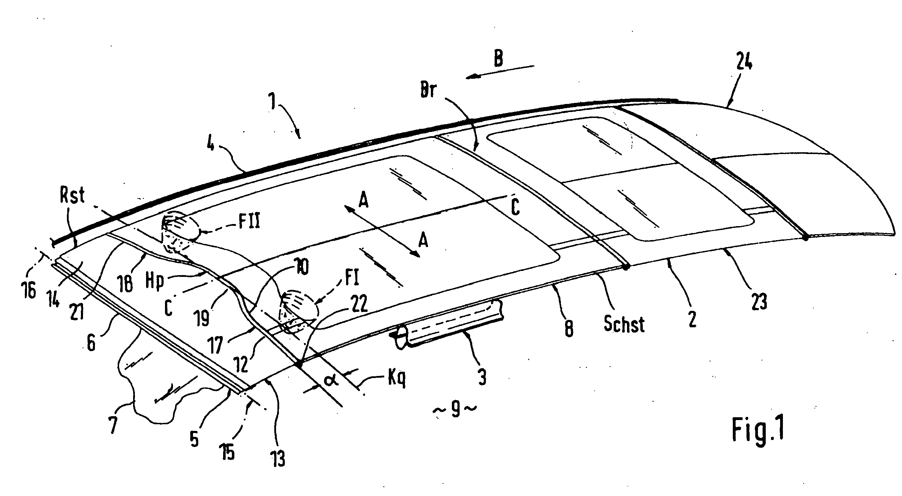

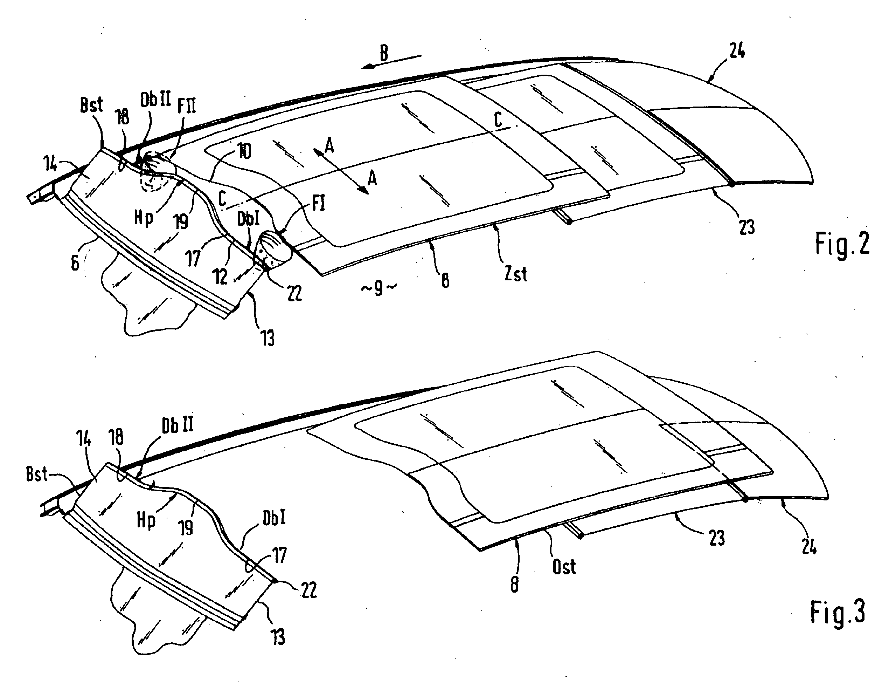

Es zeigen
Fig. 1 eine Schrägansicht eines Dachs mit mehreren Dachelementen für einen Personenkraftwagen,
Fig.2 eine Ansicht entsprechend Fig. 1, jedoch mit einer ersten veränderten Stellung von Dachelementen,
Fig. 3 eine Ansicht entsprechend Fig. 2, jedoch mit einer zweiten veränderten Stellung eines Dachelements.
   Von einem Personenkraftwagen 1 ist lediglich ein Dach 2 dargestellt, das einerseits von seitlichen Dachrahmen 3 und 4 und andererseits von einem Windschutzscheibenrahmen 5 begrenzt wird. Der mit nicht dargstellten aufrechten Säulen -A-Säulen- ausgestattete Windschutzscheibenrahmen 5 weist ein in Fahrzeugquerrichtung A-A verlaufendes Querstück 6 und eine Windschutzscheibe 7 auf.
   Das Dach 2 umfasst ein erstes Dachelement 8 das sich oberhalb von in einem Fahrgastraum 9 des Personkraftwagens 1 sitzenden Insassen - Fahrer Fl und Beifahrer FII - erstreckt und mit einem ersten vorderen Querabschnitt 10 an einen zweiten hinteren Querabschnitt 12 eines zweiten Dachelements 13 angrenzt, das in Fahrtrichtung B gesehen vor dem ersten Dachelement 8 liegt. Das zweite Dachelement 13 ist nach Art einer winkelbeweglichen Luftleitvorrichtung 14, ausgebildet, die benachbart dem Querstück 6 des Windschutzscheibenrahmens 5 an schematisch angedeuteten Scharnieren 15 und 16 gelagert ist.
   Zwischen dem ersten Querabschnitt 10 des ersten Dachelements 8 und dem zweiten Querabschnitt 12 des zweiten Dachelements sind als Durchsichtsbereiche Dbl und DBII die Insassen FI und FII ausgeführte Einformungen 17 und 18 vorgesehen, welche Durchsichtsbereiche Dbl und Dbll vor allem dann wirksam sind, wenn die Luftleitvorrichtung 14 aus einer Ruhestellung Rst -Fig. 1- in eine Betriebsstellung Bst -Fig. 2- verstellt ist. Die Einformungen 17 und 18 sind von einer Konstruktionsquerebene Kq eingearbeitet, die zwischen dem ersten Querabschnitt 10 und dem zweiten Querabschnitt 12 verläuft, wobei besagte Einformungen 17 und 18 beiderseits einer Mittellängsebene C-C des Personenkraftwagens 1 vorgesehen sind. Im Ausführungsbeispiel sind die Einformungen 17 und 18 von einer Ausformung 19 des zweiten Querabschnitts 12 weggeführt. Dabei sind die Ausformung 19 und die Einformungen 17 und 18 so zusammengesetzt, dass sich ein Hutprofil Hp ergibt. Außerdem ergeben sich durch gezielte Gestaltung der Ausformung 19 und der Einformungen 17 und 18 des Querabschnitts 13 in der Betriebsstellung Bst der Luftleitvorrichtung 14 aerodynamische Effekte, die einen Beitrag zur Luftwiderstands- und Geräuschoptimierung leisten können.
   Die Einformungen 17 und 18 des zweite Querabschnitts besitzen Einformungsbegrenzungen 20 und 21, die ein Winkel ά zur Konstruktionsquerebene Kq einschließen. Dabei bewirkt der Verlauf der Einformungsbegrenzungen 20 und 21
   jeweils eine Verjüngung der der Luftleitvorrichtung 14 bzw. des zweiten Dachelements 13 in Fahrzugquerrichtung A-A. Darüber hinaus ist der erste Querabschnitt 10 des ersten Dachelements 8 aus funktionalen und baulichen Gründen an den Verlauf der Ausformung 19 und die Einformungen 17 und 18 des zweiten Querabschnitts 10 des zweiten Dachelements 13 angepasst.
   Die Querabschnitte 10 und 12 arbeiten dann funktionsgerecht zusammen, wenn zwischen ihnen ein Dichtkörper 22 vorgesehen ist, der sich über die gesamte Breite der Luftleitvorrichtung erstreckt. In diesem Zusammenhang bietet sich an den Dichtkörper 22 am zweiten Querabschnitt 12 des zweiten Dachabschnitts 13 bzw. an der Luftleitvorrichtung 14 zu befestigen.
   Das Dach 2 ist gemäß Fig. 1 vollständig geschlossen d.h. das erste Dachelement 8 ist in einer Schließstellung Schst und die Luftleitvorrichtung 14 des zweiten Dachelements 13 nimmt die Ruhestellung Rst ein. Dabei wird das erste Dachelement 8 in einem rückwärtigen Bereich Br von einem dritten Dachelement 23 begrenzt, das fest in einen Aufbau 24 des Personenkraftwagens 1 eingesetzt ist; sämtliche Dachelemente 8, 13 und 23, die oberflächenbündig zueinander ausgerichtet sind, können aus durchsichtigem Glas bestehen. Nach Fig. 2 ist die Luftleitvorrichtung 14 in der Betriebsstellung Bst, und das erste Dachelement 8 ist teilweise durch Längsverschiebung - entgegen der Fahrtrichtung B - geöffnet, nimmt also eine Zwischenstellung Zst ein, wobei es das dritte Dachelement 22 zumindest teilweise überragt. In Fig. 3 ist das zweite Dachelement 8 vollständig geöffnet und nimmt damit eine Offenstellung Ost ein. Sobald die Luftleitvorrichtung 14 in der Betriebsstellung Bst ist -Fig. 2 und 3- eröffnet sich den Insassen FI und FII über die Durchsichtsbereiche Dbl und Dbll eine weitgehend ungehinderter Blick nach oben bzw. ins Freie.

## Patentansprüche

1. Dach für ein Kraftfahrzeug, insbesondere einen Personenkraftwagen, das wenigstens ein entlang von seitlichen Dachrahmen bewegliches erstes Dachelement umfasst, welches erste Dachelement sich oberhalb von Insassen des Personenkraftwagens erstreckt und mit einem ersten Querabschnitt an einen zweiten Querabschnitt eines zweiten Dachelements angrenzt, **dadurch gekennzeichnet, dass** zwischen dem ersten Querabschnitt (10) des ersten Dachelements (8) und dem zweitem Querabschnitt (12) des zweiten Dachelements (13) als Durchsichtbereiche (Dbl und Dbll) für die Insassen (FI und FII) ausgebildete Einformungen (17 und 18) vorgesehen sind.

2. Dach nach Anspruch 1, **dadurch gekennzeichnet, dass** das zweite Dachelement (13) nach Art einer winkelbeweglichen Luftleitvorrichtung (14) ausgebildet ist und die Einformungen (17 und 18) von einer Konstruktionsquerebene (Kq) zwischen dem erstem Querabschnitt (10) und dem zweiten Querabschnitt (12) aus eingearbeitet sind.

3. Dach nach Anspruch 2, **dadurch gekennzeichnet, dass** die Einformungen (17 und 18) im zweiten Querabschnitt (12) beiderseits einer Mittellängsebene (C-C) des Personenkraftwagens (1) vorgesehen sind.

4. Dach nach den Ansprüche 1 und 2, **dadurch gekennzeichnet, dass** die Einformungen (17 und 18) von einer Ausformung (19) des zweiten Querabschnitts (12) aus weggeführt sind.

5. Dach nach einem oder mehreren der vorangehenden Ansprüche, **dadurch gekennzeichnet, dass** die Ausformung (19) und die Einformungen (17 und 18) nach Art eines Hutprofils (Hp) zusammengesetzt sind.

6. Dach nach den Ansprüchen 2 und 4, **dadurch gekennzeichnet, dass** zu seitlichen Dachrahmen (3 und 4) hin verlaufende Einformungsbegrenzungen (20 und 21) des
zweiten Querabschnitts (12) im Winkel (ά) zur Konstruktionsquerebene (Kq) sich erstrecken.

7. Dach nach Anspruch 6, **dadurch gekennzeichnet, dass** der Verlauf der Einformungsbegrenzungen (20 und 21) eine Verjüngung der Luftleitvorrichtung (14) in Fahrzeugquerrichtung (A-A) bewirken.

8. Dach nach einem oder mehreren der vorangehenden Ansprüche, dass der erste Querabschnitt (10) an die Einformungen (17 und 18) und die Ausformung (19) des zweiten Querabschnitts (12) angepasst sind.

9. Dach nach einem oder mehreren der vorangehenden Ansprüche, **dadurch gekennzeichnet, dass** zwischen dem ersten Querabschnitt (10) und dem zweiten Querabschnitt (13) ein Dichtkörper (22) verläuft.

10. Dach nach Anspruch 9, **dadurch gekennzeichnet, dass** der Dichtkörper (22) am zweiten Querabschnitt (12) des zweiten Dachelements (13) vorgesehen ist.

11. Dach nach einem oder mehreren der vorangehenden Ansprüche, **dadurch gekennzeichnet, dass** die Einformungen (17 und 18) und die Ausformung (19) des zweiten Dachelements (13) in der Weise ausgebildet sind, das sich aerodynamische Effekte ergeben.
